# FASCICULE DE BREVET EUROPEEN

(11) **EP 3 500 455 B1**
(45) Date de publication et mention de la délivrance du brevet: **25.08.2021**
(21) Numéro de dépôt: 17746167.0
(22) Date de dépôt: 03.07.2017
(51) Int. Cl.: B60R 19/34, F16F 7/12

(54) **ABSORBEUR DE CHOC ARRIERE DE VEHICULE AUTOMOBILE**
HINTERER SCHALLDÄMPFER FÜR EIN KRAFTFAHRZEUG
REAR SHOCK ABSORBER FOR A MOTOR VEHICLE

(30) Priorité: 16.08.2016 FR 1657773
(43) Date de publication de la demande: 26.06.2019
(73) Titulaire: PSA Automobiles SA, 78300 Poissy (FR)
(72) Inventeur: LAIR, Renaud, 75015 Paris (FR)
(86) Numéro de dépôt international: PCT/FR2017/051801
(87) Numéro de publication internationale: WO 2018/033668

(56) Documents cités:
- EP-A1- 1 688 312
- DE-A1- 19 711 647
- JP-A- H08 276 804
- KR-A- 20100 049 328
- US-A1- 2015 353 040

## Description

L'invention traite de collision de véhicule. Plus précisément, l'invention se rapporte au domaine des dispositifs d'absorption de choc de véhicule. L'invention propose en outre un véhicule automobile muni d'un dispositif d'absorption de choc, notamment pour un choc réparable.

Un véhicule automobile présente généralement un pare-chocs arrière avec un système d'absorption d'énergie. Un tel système permet de dissiper l'énergie du choc en se déformant progressivement, selon une déformation programmée également appelée déformation maîtrisée. Cette conception du système permet de réduire les dommages véhicule tout en protégeant les occupants. Un tel système est couramment adapté pour les chocs à basse vitesse. En particulier, ce système peut être adapté de sorte à réduire le nombre de composants devant être remplacés en cas de choc urbain.

Le document EP1190915B1 divulgue un véhicule automobile dont la partie arrière de carrosserie est équipée d'un dispositif pare-chocs. Le dispositif est muni d'éléments résistant aux chocs par déformation élastique. Ces éléments sont chacun reliés à un longeron. Entre ces éléments s'étendent une traverse rectangulaire rapportée ; et une traverse trapézoïdale, également appelée premier corps partiel. Au montage, ces traverses sont écartées longitudinalement l'une de l'autre, et se rapprochent de manière maîtrisée en cas de choc à faible vitesse. Le rapprochement est contrôlé grâce à la capacité d'absorption d'énergie des éléments, ce qui permet d'optimiser le comportement en cas d'accident à faible vitesse. Cependant, l'efficacité de cette architecture reste limitée. En effet, la traverse trapézoïdale tend à basculer en cas de collision arrière pour certaines configurations de véhicules.

Le document JPH08276804 décrit un véhicule selon le préambule de la revendication 1 comprenant un élément absorbant l'énergie de collision pour une automobile. Dans un mode de réalisation l'élément absorbant peut comprendre sur ses faces des protubérances dépassant vers l'extérieur des faces de l'absorbeur.

Le document DE19711647 décrit un absorbeur absorbant l'énergie d'un choc pour véhicule automobile, ledit absorbeur a une forme cylindrique de section rectangulaire, avec sur Ses faces extérieures des nervures qui s'étendent longitudinalement par rapport à l'absorbeur.

Le document EP1688312 décrit un élément de type absorbeur de choc pour véhicule automobile dont la forme est celle d'un profilé creux. Le profilé est renforcé par des parois internes s'étendant longitudinalement sur la longueur dudit profilé. Le document KR20100049328A décrit un véhicule comprenant au moins un dispositif absorbeur de choc comprenant un longeron et une traverse reliée au longeron via le dispositif absorbeur, la traverse étant décalée verticalement par rapport au dispositif et/ou par rapport au longeron.

L'invention a pour objectif de résoudre au moins un des problèmes posés par l'art antérieur. Plus précisément, l'invention a pour objectif d'améliorer la capacité d'absorption d'énergie de choc d'un véhicule, notamment en cas de choc type choc urbain.

L'invention a pour objet un véhicule selon la revendication 1.

Selon des modes particuliers de réalisation, le véhicule peut comprendre une ou plusieurs des caractéristiques suivantes, prises isolément ou selon toutes les combinaisons techniques possibles :
- L'excroissance comprend un créneau faisant saillie vers le bas sur toute la longueur longitudinale du corps.
- La face inférieure comprend au moins une ou deux surfaces inférieures profilées et concaves qui bordent l'excroissance.
- L'excroissance est disposée transversalement au centre du corps.
- Le corps est un corps extrudé selon un profil d'extrusion qui génère l'excroissance.
- Le corps comprend une cloison verticale s'étendant longitudinalement et/ou une cloison horizontale s'étendant longitudinalement.
- Le corps comprend une face latérale avec un tube de renfort.
- Le dispositif comprend une platine de fixation à laquelle le corps est lié, la platine comprenant des moyens de fixation à distance du corps.
- Le corps comprend une paroi externe formant la face inférieure, et éventuellement l'excroissance.
- Le corps est adapté pour absorber de l'énergie par compression longitudinale, notamment par déformation plastique.
- Le corps est un corps profilé avec un profil longitudinal formant l'excroissance.
- La plaque comprend une arrête inférieure longitudinale et/ou libre.
- Au moins une ou chaque platine est fixée à un longeron.
- Les moyens de fixation comprennent des orifices, éventuellement répartis autour du corps.
- Le dispositif comprend en particulier une platine de fixation à laquelle le corps est lié, la platine comprenant deux orifices inférieurs dont l'écartement est inférieur à la largeur transversale L1 de la face inférieure.
- Les orifices inférieurs sont séparés par l'excroissance.
- Les deux surfaces inférieures profilées et concaves épousent les deux orifices inférieurs.
- Le profil d'extrusion et/ou de profilage comprend au moins une courbe contournant un des moyens de fixation.
- La face latérale comprend deux branches profilées longitudinalement qui sont inclinées par rapport à la direction verticale.
- Le corps est monobloc et/ou venu de matière.
- La plaque prolonge le créneau vers le bas.
- Le corps s'étend verticalement sur la majorité de la hauteur de la traverse.
- Le dispositif est un premier dispositif, le véhicule comprenant en outre un deuxième dispositif identique ou similaire au premier dispositif.

L'invention a également pour objet un véhicule comprenant au moins un dispositif latéral absorbeur d'énergie de choc, le dispositif comprenant un corps avec une face inférieure ; remarquable en ce que la face inférieure du corps comporte deux renflements latéraux s'étendant sur toute la longueur longitudinale dudit corps. Les renflements peuvent éventuellement border l'excroissance, et/ou épouser des moyens de fixation tels des orifices de fixation.

De manière générale, les modes particuliers de chaque objet de l'invention sont également applicables aux autres objets de l'invention. Dans la mesure du possible, chaque objet de l'invention est combinable aux autres objets.

La présence de l'excroissance sur la face inférieure permet d'accroitre la stabilité de la traverse en cas d'accident. Dans la mesure où cette excroissance s'étend sur toute la longueur du corps, elle améliore la rigidité au corps face à une collision. En particulier, elle évite que l'extrémité inférieure du corps ne bascule vers l'arrière en raison du moment d'axe transversal qu'exerce la traverse en cas de choc. En complément, la face inférieure présente des surfaces concaves qui stabilisent l'excroissance. Elles agissent comme des cornières de rigidification. Par ce biais, on évite que la face inférieure ne se plie malgré la flexion exercée par la traverse. Par conséquent, l'invention permet d'améliorer la stabilité, et donc la sécurité, malgré un éventuel déport de la traverse vers le bas.

L'invention permet de conserver le positionnement vertical de la traverse par rapport aux longerons. Ce positionnement peut notamment être préservé au cours d'un choc malgré un décalage significatif entre la traverse et les longerons. Une telle configuration peut se rencontrer, par exemple, dans un véhicule rehaussé. En effet, un tel véhicule peut présenter une garde au sol augmentée ce qui se traduit par des longerons en élévation par rapport à une traverse.

D'autres caractéristiques et avantages de la présente invention seront mieux compris à l'aide de la description donnée à titre d'exemple et en référence aux dessins parmi lesquels :
La figure 1 présente une partie arrière de véhicule selon l'invention.
La figure 2 illustre une coupe du dispositif absorbeur de choc selon un premier mode de réalisation de l'invention.
La figure 3 illustre une coupe du dispositif absorbeur de choc selon un deuxième mode de réalisation de l'invention.

Dans la description qui va suivre, la direction longitudinale correspond à la direction principale de déplacement du véhicule, et le sens avant à son sens principal de déplacement. La direction transversale est perpendiculaire à la direction longitudinale. Les orientations évoquées ci-après renvoient au sens normal de montage dans le véhicule.

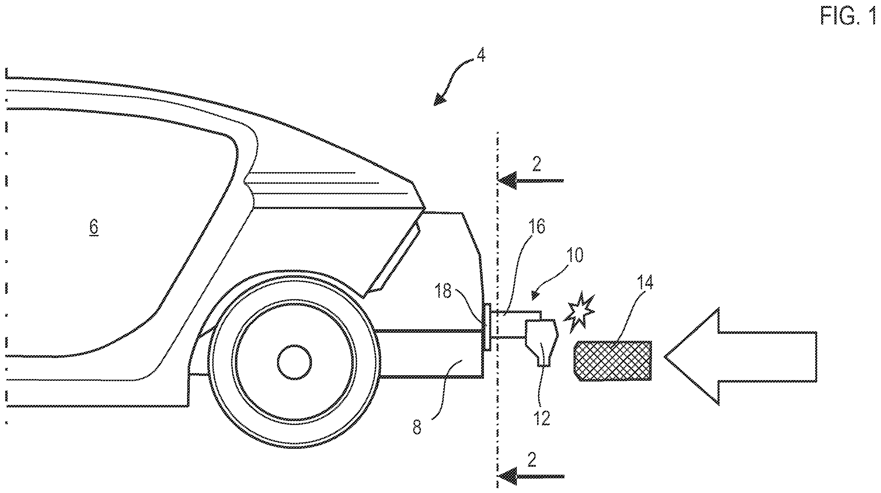

La figure 1 montre une partie arrière 4 de véhicule, par exemple de type automobile. La partie arrière 4 est représentée de manière partielle, certains éléments de carrosserie n'étant pas illustrés par soucis de clarté. Cette partie arrière est représentée depuis la gauche. Une partie de l'habitacle 6 est visible.

Le véhicule présente deux longerons 8 parallèles, le longeron de droite étant caché par celui de gauche. Ces longerons 8 peuvent notamment être conçus de sorte à porter le véhicule. Par exemple, l'essieu arrière peut y être fixé. Afin de préserver le véhicule, un ou plusieurs dispositifs absorbeur de choc 10 (un seul étant visible) sont prévus, notamment à l'arrière du véhicule. Chaque dispositif 10 peut être placé latéralement, par exemple dans le prolongement d'un des longerons 8. Ils peuvent également servir au montage d'une traverse arrière 12 qui forme une barrière de protection contre les intrusions.

Dans le cas d'une collision arrière par un butoir normalisé 14, ou contre un véhicule réel, il apparait que l'énergie du choc est transmise de la traverse 12 aux longerons 8 via les dispositifs absorbeur de choc 10. La déformation programmée de ces derniers permet alors de préserver les longerons 8, et éventuellement la traverse 12 ou d'autres équipements. La déformation programmée en question peut notamment limiter le nombre de pièces déformées ou détruites, en cas de choc. Ceci réduit le coût d'une réparation pour une collision à faible vitesse. Le potentiel d'absorption d'énergie des dispositifs absorbeur de choc 10 peut être configuré de sorte à sauvegarder partiellement le véhicule pour des chocs urbains, c'est-à-dire des chocs à une vitesse inférieure ou égale à 50 km/h, ou à 30km/h. La configuration peut correspondre à un cas où le véhicule est initialement à l'arrêt.

Au moins un ou chaque dispositif absorbeur de choc 10 présente un corps 16, et éventuellement une platine de fixation 18 fixée à un des longerons 8. Le corps 16 est adapté pour se déformer en cas de choc et assurer une fonction de fusible mécanique préservant l'intégrité physique du châssis du véhicule. En cas de choc, il se déforme selon la direction longitudinale. Il s'écrase progressivement en absorbant l'énergie du choc.

Lorsque le véhicule est surélevé, par exemple du type « SUV » pour l'acronyme anglo-saxon « Sport Utility Vehicle », le dispositif absorbeur de choc 10 est en élévation par rapport au butoir normalisé de test 14. La traverse 12 doit alors être prolongée vers le bas pour former une barrière face à ce butoir normalisé 14. Or, ce prolongement et la zone d'implantation des dispositifs absorbeur de choc 10 génèrent un couple de torsion dans ces derniers.

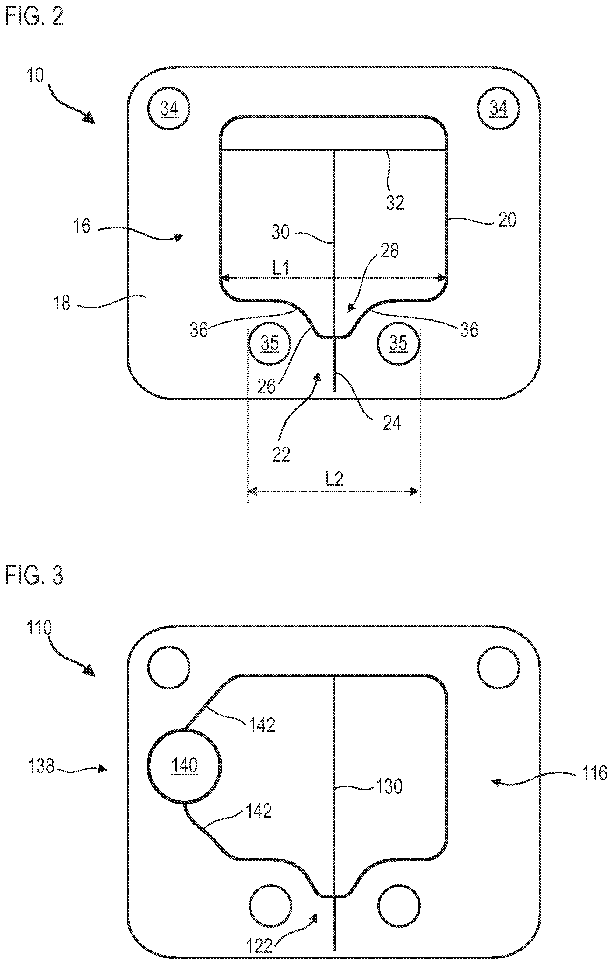

La figure 2 présente un dispositif d'absorption de choc 10 selon le premier mode de réalisation de l'invention à l'aide d'une coupe selon l'axe 2-2 tracé sur la figure 1. Cette coupe traverse le dispositif 10 au niveau du corps 16, la platine de fixation 18 apparaît en arrière plan.

Le corps 16 peut être monobloc, et éventuellement venu de matière. Il peut être un élément extrudé, notamment en aluminium. Cette manière de produire le corps 16 accroît sa résistance et la sécurité qu'il apporte. Le corps 16 peut présenter une paroi externe 20 formant sa surface externe, et dessinant son contour. La paroi 20 peut être d'épaisseur constante, et éventuellement continue sur tout le tour du corps 16. Le corps 16 peut être creux. Il peut monter un profil, par exemple un profil longitudinal et/ou un profil d'extrusion en forme de rectangle. Il peut montrer une face supérieure et des faces latérales généralement planes.

La face inférieure du corps 16, qui correspond au côté inférieur de son profil et qui est tournée vers le sol, présente une excroissance 22 vers le bas. L'excroissance 22 fait saillie vers le bas par rapport à la face inférieure. Elle forme un rail ou une cannelure tourné(e) vers le bas. Ce prolongement inférieur augmente le moment quadratique du profil, notamment vis-à-vis d'une rotation d'axe transversal. Cette excroissance 22 peut s'étendre sur la majorité de la longueur du corps, ou sur toute sa longueur pour que la stabilité soit optimale.

Elle peut être agencée en position centrale selon la direction transversale du véhicule. L'excroissance 22 peut s'étendre longitudinalement d'une extrémité à l'autre du corps, ce qui peut signifier qu'elle relie la platine 18 à la traverse.

L'excroissance 22 peut comprendre une plaque 24 verticale s'étendant sur toute la longueur du corps 16. La plaque 24 peut former un ruban longitudinal. Elle peut former une branche de renfort du corps 16. En complément ou à la place, l'excroissance 22 peut comporter un créneau longitudinal 26 s'étendant sur la majorité ou toute la longueur du corps 16. Le créneau 26 peut former une vague longitudinale. Il peut être formé par la paroi 20. Depuis l'intérieur du corps 16, le créneau 26 peut matérialiser un chenal 28 traversant le corps 16. Le créneau 26 et la plaque 24 peuvent être venus de matière avec l'ensemble du corps 16.

L'intérieur du corps 16 peut être subdivisé longitudinalement. Il peut renfermer une cloison verticale 30, éventuellement dans le prolongement de la plaque 24. Cette cloison verticale 30 peut également partager le chenal 28. En outre, une cloison horizontale 32 peut coiffer la cloison verticale 30, en étant parallèle et à distance de la face supérieure du corps. Les cloisons (30 ; 32) peuvent également être venues de matière avec l'ensemble du corps 16. Elles peuvent être d'épaisseur(s) inférieure(s) à celle de la paroi 20. Ainsi, leur présence et leur agencement contribue à préserver la stabilité générale en cas de choc.

La platine 18 peut comprendre des moyens de fixation, par exemple des orifices (34 ; 35). Le positionnement de ces orifices est généralement dit « standard » sur les longerons que le véhicule soit classique ou de type SUV. Les moyens de fixation permettent une fixation sur les longerons. Ces moyens peuvent être répartis autour du corps 16, et à distance de ce dernier. Afin de simplifier le montage du dispositif 10, le corps 16 peut comprendre des surfaces incurvées 36 qui contournent des orifices 35. Les surface incurvées 36, présentent des profils concaves. Elles bordent transversalement l'excroissance 22. Elles forment des renflements ou des feuillures, disposés sur les côtés de la face inférieure du corps.

La platine 18 peut notamment présenter des orifices supérieurs 34, et deux orifices inférieurs 35. Ces deux orifices inférieurs 35 peuvent être disposés de part et d'autres de l'excroissance 22, en regard de la face inférieure. Par ailleurs, la largeur L1 de la face inférieure peut enjamber transversalement ces orifices inférieurs 35. La largeur transversale L1 peut être supérieure à la largeur L2 qu'occupent des orifices inférieurs 35. La largeur L2 peut être mesurée aux extrémités opposées des orifices inférieurs 35, elle peut être une largeur bout à bout. Les surfaces incurvées 36 peuvent généralement épouser les orifices inférieurs 35, si bien que le contour du corps 16 est essentiellement rapproché des orifices inférieurs 35. Cette configuration optimise la compacité du corps 16, tout en facilitant l'utilisation d'une douille pour le serrage de vis dans ces orifices inférieurs 35. L'invention permet donc de conserver le positionnement des orifices inférieurs 35 malgré le besoin de prolonger le corps 16 entre eux pour répondre à un besoin de résistance du corps.

Ainsi, l'invention favorise une configuration compacte permettant d'intercaler l'excroissance 22 à côté d'un orifice 34, ou entre les moyens de fixation voisins. Dès lors, la présence de l'excroissance 22 autorise toujours une optimisation de la taille de platine 18.

La figure 3 représente un dispositif absorbeur de choc 110 selon un deuxième mode de réalisation de l'invention. Cette figure 3 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le dispositif absorbeur de choc 110 est sensiblement identique à celui du premier mode de réalisation. Il en diffère toutefois au niveau d'une face latérale 138, et des cloisons de séparation internes. La cloison verticale 130 peut s'étendre sur toute la hauteur de l'intérieur du corps 116. En option, elle remplace la cloison horizontale. Toutefois, une cloison horizontale similaire à celle du premier mode de réalisation pourrait être liée à la cloison verticale 130.

La face latérale 138 peut inclure un tube de renfort 140 qui s'étend sur toute la longueur longitudinale du corps 116. Le tube 140 est donc disposé sur une autre face que celle recevant l'excroissance 122. Le tube 140 peut couper la paroi externe 118. Celle-ci peut alors former deux branches latérales 142 prolongeant le tube 140 verticalement. Les branches latérales 142 sont disposées de part et d'autre du tube de renfort 140. Elles peuvent être inclinées par rapport à la direction verticale, ce qui permet d'allonger latéralement le corps 116. Bien entendu, le tube 140 assure une fonction de renfort, il peut également permettre le passage d'un équipement. Un moyen de fixation à un longeron peut y être placé.

Selon un mode de réalisation de l'invention, le véhicule peut comprendre deux dispositifs d'absorption de choc selon le premier mode de réalisation, et/ou deux dispositifs d'absorption de choc selon le deuxième mode de réalisation. Ou encore, le véhicule peut comprendre un dispositif d'absorption de choc selon le premier mode de réalisation à gauche, et un dispositif d'absorption de choc selon le deuxième mode de réalisation à droite ; ou inversement. Les dispositifs sont liés à la même traverse, et éventuellement placés dans le prolongement d'un des deux longerons.

## Revendications

1. Véhicule comprenant au moins un dispositif absorbeur de choc (10 ; 110), notamment de choc arrière, le dispositif (10 ; 110) comprenant un corps (16 ; 116) avec une face inférieure comportant une excroissance (22 ; 122) faisant saillie vers le bas et s'étendant sur toute la longueur longitudinale dudit corps (16 ; 116), ledit véhicule est **caractérisé en ce qu'**il comprend un longeron (8) et une traverse (12) reliée au longeron (8) via le dispositif absorbeur (10 ; 110), la traverse (12) étant décalée verticalement par rapport au dispositif (10; 110) et/ou par rapport au longeron (8), l'excroissance (22; 122) comprenant une plaque (24) s'étendant verticalement et longitudinalement.

2. Véhicule selon la revendication 1, **caractérisé en ce que** l'excroissance (22 ; 122) comprend un créneau (26) faisant saillie vers le bas sur toute la longueur longitudinale du corps (16 ; 116).

3. Véhicule selon l'une des revendications 1 à 2, **caractérisé en ce que** la face inférieure comprend au moins une ou deux surfaces inférieures profilées et concaves (36) qui bordent l'excroissance (22 ; 122).

4. Véhicule selon l'une des revendications 1 à 3, **caractérisé en ce que** le dispositif (10 ; 110) comprend une platine de fixation (18) à laquelle le corps (16 ; 116) est lié, la platine (18) comprenant deux orifices inférieurs (35) dont l'écartement est inférieur à la largeur transversale L1 de la face inférieure.

5. Véhicule selon l'une des revendications 1 à 4, **caractérisé en ce que** le corps (16 ; 116) est un corps (16 ; 116) extrudé selon un profil d'extrusion qui génère l'excroissance (22 ; 122).

6. Véhicule selon l'une des revendications 1 à 5, **caractérisé en ce que** le corps (16; 116) comprend une cloison verticale (30; 130) s'étendant longitudinalement et/ou une cloison horizontale (32) s'étendant longitudinalement.

7. Véhicule selon l'une des revendications 1 à 6, **caractérisé en ce que** le corps (116) comprend une face latérale (138) avec un tube de renfort (140).

8. Véhicule selon l'une des revendications 1 à 7, **caractérisé en ce que** l'excroissance (22 ; 122) est disposée transversalement au centre du corps (16 ; 116).

## Patentansprüche

1. Fahrzeug mit mindestens einer Stoßdämpfervorrichtung (10; 110), insbesondere für Heckaufprall, die Einrichtung (10; 110) mit einem Körper (16; 116) mit einer Unterseite mit einem Vorsprung (22; 122) nach unten ragen und sich über die gesamte Länge des Körpers (16; 116), **dadurch gekennzeichnet, dass** das Fahrzeug einen Längsträger (8) und einen Querträger (12) aufweist, der über die Absorptionseinrichtung (10) mit dem Längsträger (8) verbunden ist; 110), wobei der Querträger (12) gegenüber der Vorrichtung (10) vertikal versetzt ist; 110) und/oder im Verhältnis zum Längsträger (8) die Zunahme (22; 122) mit einer vertikal und längs verlaufenden Platte (24).

2. Fahrzeug nach Anspruch 1, **dadurch gekennzeichnet, dass** die Auswuchtung (22; 122) einen über die gesamte Länge des Körpers (16 ;116) nach unten vorstehenden Schlitz (26) aufweist.

3. Fahrzeug nach einem der Ansprüche 1 bis 2, **dadurch gekennzeichnet, dass** die Unterseite mindestens eine oder zwei konkave, profilierte Unterflächen (36) aufweist, die den Vorsprung (22; 122).

4. Fahrzeug nach einem der Ansprüche 1 bis 3, **dadurch gekennzeichnet, dass** die Vorrichtung (10; 110) eine Befestigungsplatte (18) aufweist, an der der Körper (16; 116) verbunden ist, wobei die Platine (18) zwei untere Öffnungen (35) aufweist, deren Abstand kleiner als die Querbreite L1 der Unterseite ist.

5. Fahrzeug nach einem der Ansprüche 1 bis 4, **dadurch gekennzeichnet, dass** der Körper (16; 116) ein Körper (16; 116) extrudiert nach einem Extrusionsprofil, das die Exkremente erzeugt (22; 122).

6. Fahrzeug nach einem der Ansprüche 1 bis 5, **dadurch gekennzeichnet, dass** der Körper (16; 116) eine vertikale Trennwand (30; 130), die sich in Längsrichtung erstrecken, und/oder eine in Längsrichtung verlaufende horizontale Trennwand (32).

7. Fahrzeug nach einem der Ansprüche 1 bis 6, **dadurch gekennzeichnet, dass** der Körper (116) eine Seitenfläche (138) mit einem Verstärkungsrohr (140) aufweist.

8. Fahrzeug nach einem der Ansprüche 1 bis 7, **dadurch gekennzeichnet, dass** der Exground (22; 122) quer zur Mitte des Körpers (16; (116)

## Claims

1. Vehicle incorporating at least one shock absorber device (10; 110), including rear impact, the device (10; 110) including a body (16;116) with a lower face with an exgrowth (22; 122) protruding downward and extending over the whole longitudinal length of the said body (16; 116), the said vehicle is **characterized in that** it includes a longeron (8) and a crossed (12) connected to the longeron (8) through the absorber device (10; 110), the cross (12) being shifted vertically from the device (10; 110) and/or in relation to the longeron (8), exgrowth (22; 122) comprising a plate (24) extending vertically and lengthwise.

2. Vehicle according to Claim 1, characterized as exgrowth (22; 122) includes a slot (26) protruding downward throughout the longitudinal length of the body (16; 116).

3. Vehicle according to one of the claims 1 to 2, characterized as the lower face consists of at least one or two lower surfaces which are profiled and concave (36) that border the exgrowth (22; 122).

4. Vehicle according to one of the claims 1 to 3, characterized as the device (10; 110) includes a mounting plate (18) to which the body (16; 116) is bonded, the platinum (18) having two lower orifices (35) whose width is less than the cross-width L1 of the lower face.

5. Vehicle according to one of the claims 1 to 4, characterized as the body (16; 116) is a body (16; 116) extruded according to an extrusion profile that generates exgrowth (22; 122).

6. Vehicle according to one of the claims 1 to 5, characterized as the body (16; 116) includes a vertical bulkhead (30; 130) extending lengthwise and/or a horizontal bulkhead (32) extending lengthwise.

7. Vehicle according to one of the claims 1 to 6, **characterized in that** the body (116) includes a side face (138) with a reinforcement tube (140).

8. Vehicle according to one of the claims 1 to 7, characterized as exgrowth (22; 122) is arranged transversely in the center of the body (16; 116).
